# EUROPEAN PATENT SPECIFICATION

(11) **EP 3 989 333 B1**
(45) Date of publication and mention of the grant of the patent: **01.10.2025**
(21) Application number: 20858696.6
(22) Date of filing: 13.08.2020
(51) Int. Cl.: H01M 10/643, H01M 10/6556, H01M 10/613, H01M 10/625, H01M 50/271, H01M 50/291, H01M 10/6557, H01M 10/6562, H01M 50/213, H01M 50/289

(54) **BATTERY MODULE COMPRISING CELL FRAME**
BATTERIEMODUL MIT ZELLENRAHMEN
MODULE DE BATTERIE COMPRENANT UN CADRE DE CELLULE

(30) Priority: 27.08.2019 KR 20190105126
(43) Date of publication of application: 27.04.2022
(73) Proprietor: LG Energy Solution, Ltd., Seoul 07335 (KR)
(72) Inventor: PARK, Chang-Wook, Daejeon 34122 (KR); LEE, Hyun-Jong, Daejeon 34122 (KR)
(74) Representative: Plasseraud IP
(86) International application number: PCT/KR2020/010801
(87) International publication number: WO 2021/040293

(56) References cited:
- WO-A1-2013/018151
- JP-A- 2000 280 759
- KR-A- 20180 021 265
- KR-A- 20190 030 835
- KR-B1- 100 549 907
- KR-B1- 101 097 268
- KR-B1- 101 097 268
- US-A1- 2005 079 408
- US-A1- 2011 287 287
- US-A1- 2011 287 287

## Description

### TECHNICAL FIELD

The present disclosure relates to a battery module comprising a cell frame, and more particularly, to a battery module having the increased operating life by efficiently maintaining the heat balance.

The present application claims priority of Korean Patent Application No. 10-2019-0105126 filed on August 27, 2019 with the Korean Intellectual Property Office.

### BACKGROUND ART

Currently, commercially available secondary batteries include nickel cadmium batteries, nickel hydride batteries, nickel zinc batteries, lithium secondary batteries, etc., and among them, lithium secondary batteries have little or no memory effect, and thus they are gaining more attention than nickel-based secondary batteries for their advantages that recharging can be done whenever it is convenient, the self-discharge rate is very low and the energy density is high.

The lithium secondary battery mainly uses lithium-based oxide and a carbon material for a positive electrode active material and a negative electrode active material respectively. The lithium secondary battery includes an electrode assembly including a positive electrode plate coated with the positive electrode active material, a negative electrode plate coated with the negative electrode active material and a separator interposed between, and a hermetically sealed packaging material or battery pouch case in which the electrode assembly is received together with an electrolyte solution.

More recently, secondary batteries are being widely used in not only small devices such as portable electronic products but also medium- and large-scale devices such as vehicles and energy storage systems (ESSs). For use in medium- and large-scale devices, many secondary batteries are electrically connected to increase the capacity and output. In particular, pouch-type secondary batteries are widely used in medium- and large-scale devices because they are easy to stack.

With the growing need for a large-capacity structure for use as an energy storage source, there is an increasing demand for a battery module including a plurality of secondary batteries electrically connected in series and/or in parallel and a metal plate electrically connecting the secondary batteries.

The battery module generally uses cooling technology to prevent the rapid temperature rise of the secondary batteries during use. For example, it is general to cool the received secondary batteries by feeding cold air into a housing of the battery module.

However, since the contact area with cold air in the battery module is not uniform for each secondary battery, the cooling effect concentrates on some secondary batteries and the cooling effect on the remaining secondary batteries is low, so overheat may occur in some secondary batteries. That is, in case that heat imbalance occurs, when some of secondary batteries are placed in high temperature condition, degradation occurs, and the life of some secondary batteries may greatly reduce, which may be the main factor that reduces the life of the battery module.

Accordingly, to increase the life of the battery module, it is important to maintain the heat balance (uniform temperature) between the secondary batteries during the use of the battery module.

JP 2000 280759 discloses air discharge ports opened on both ends of a holder case with holes being bigger in the center. KR 101 097 268 discloses heat dissipation aperture in a holder case and holes provided in a insulating cover. US 2005/079408 discloses heat management of a holder case. US 2011/287287 describes a plurality of vent holes formed at regular intervals on the respective sides of a case to release heat generated in the cells to the outside.

### DISCLOSURE

### Technical Problem

The present disclosure is designed to solve the above-described problem, and therefore the present disclosure is directed to providing a battery module having the increased operational life by efficiently maintaining the heat balance.

These and other objects and advantages of the present disclosure can be understood by the following description, and will be apparent from the embodiments of the present disclosure. In addition, it will be readily appreciated that the objects and advantages of the present disclosure can be realized by means and combinations thereof.

### Technical Solution

To achieve the above-described object, a battery module according to the present disclosure includes a plurality of cylindrical battery cells including an electrode terminal formed in each of an upper end and a lower end, and arranged in a horizontal direction, a module housing including an upper wall, a sidewall and a lower wall to receive the plurality of cylindrical battery cells, at least one of the upper wall or the lower wall having a plurality of cooling holes through the coolant flows in and out, at least two of the cooling holes having different sizes, and a cell frame received in the module housing and including an insertion portion having an inner wall to wrap around at least part of an outer surface of each of the plurality of cylindrical battery cells, and a plurality of cooling passages connected to the cooling holes in communication with the cooling holes and having a tubular shape extending in a vertical direction to allow the coolant to flow in and out.

Additionally, at least two of the plurality of cooling holes may be configured such that a cooling hole closer to a center has a larger diameter than a cooling hole disposed at an outer side.

Additionally, the cooling passage may have a size corresponding to a diameter of the cooling hole in communication with the cooling passage.

Additionally, the plurality of cylindrical battery cells are spaced apart from each other to allow the coolant to flow.

Additionally, the cell frame includes an upper case including the plurality of insertion portions and the plurality of cooling passages, and a lower case coupled to bottom of the upper case and including the plurality of insertion portions and the plurality of cooling passages.

Additionally, the plurality of cooling passages of the upper case and the plurality of cooling passages of the lower case are disposed corresponding to each other in the vertical direction, and the plurality of cooling passages of the upper case and the plurality of cooling passages of the lower case are spaced apart from each other in the vertical direction.

Additionally, the plurality of cooling holes in the upper wall of the module housing may be configured to allow the coolant to flow from outside to inside, and the plurality of cooling holes provided in the lower wall of the module housing may be configured to force the coolant fed into the module housing out.

Additionally, at least some of the cooling passages of the upper case may include a guide portion configured to change a flow direction of the coolant to a horizontal inward direction of the plurality of cylindrical battery cells.

Additionally, the guide portion may include a guide protrusion extending in the horizontal inward direction of the plurality of cylindrical battery cells.

Additionally, the guide portion may have a bent structure in which the cooling passages of the upper case are bent in the horizontal inward direction of the plurality of cylindrical battery cells.

Additionally, the plurality of cooling holes provided in the upper wall of the module housing may include a tapered structure having an inner diameter gradually decreasing in the horizontal inward direction.

Additionally, the plurality of cooling holes provided in the lower wall of the module housing may include a tapered structure having an inner diameter gradually decreasing in a vertical outward direction.

Additionally, the cooling passage may have an outer end extending in the vertical direction from an outer surface of the cell frame, and the cell frame may have an exposure hole to expose the electrode terminal to the outside.

Additionally, the battery module may further include a connection hole mounted on each of the upper and lower parts of the cell frame, the connection hole in communication with the exposure hole, a connection terminal extending from an inner side of the connection hole to electrically connect the plurality of cylindrical battery cells, and at least one connecting plate having an insertion groove in which the end of the cooling passage is inserted.

Additionally, each of an upper surface and a lower surface of the cell frame may have a partition wall extending in an outward direction and extending linearly in the horizontal direction, of which part connects the plurality of cooling passages, and the partition wall may be disposed corresponding to an outer periphery of the connecting plate in the horizontal direction.

Additionally, the battery module may further include a thermally conductive pad mounted on an outer side of the connecting plate and including a fixing groove into which the cooling passage is inserted, and a heat sink the mounted on an outer side of the thermally conductive pad and including a fixing hole into which the cooling passage is inserted.

Additionally, to achieve the above-described object, a battery pack according to the present disclosure includes at least one battery module.

Additionally, to achieve the above-described object, an electronic device according to the present disclosure includes the battery pack.

### Advantageous Effects

According to an aspect of the present disclosure, the battery module of the present disclosure is configured such that at least two of the plurality of cooling holes provided in the module housing have different sizes, to increase the amount of the flow of coolant in an area where cooling is required, thereby adjusting the temperature for each area inside the battery module. Accordingly, it is possible to prevent overheat at a specific area of the battery module.

The cell frame of the present disclosure includes the plurality of cooling passages configured to be in communication with the cooling holes, heat of the coolant flowing into the cooling holes may be effectively transmitted to the plurality of cylindrical battery cells received in the insertion portion. The present disclosure may protect the plurality of cylindrical battery cells from external impacts by the module housing and the cell frame, and supply the coolant supplied from the outside to the plurality of cylindrical battery cells, thereby greatly increasing the cooling efficiency.

According to an aspect of an embodiment of the present disclosure, the present disclosure is configured such that among at least two of the plurality of cooling holes provided in the lower wall of the module housing, the cooling hole closer to the center has a larger diameter than the cooling hole disposed at the outer side, so that a larger amount of coolant may be fed into the lower wall of the module housing or a larger amount of coolants fed into the module housing may be forced out as it is closer to the horizontal center of the module housing.

According to an aspect of the present disclosure, at least two of the plurality of cooling holes provided in the upper wall of the module housing are configured such that the cooling hole closer to the center has a larger diameter than the cooling hole disposed at the outer side, so that a larger amount of coolants may be fed into the upper wall of the module housing or a larger amount of coolants fed into the module housing may be forced out as it is closer to the horizontal center of the module housing.

According to an aspect of the present disclosure, the cooling passage is configured to have the size corresponding to the dimeter of the cooling hole in communication with the cooling passage, to allow the coolant flowing in through the cooling hole of the module housing to move along the cooling passage without interruption, thereby increasing the cooling efficiency.

According to an aspect of the present disclosure, the plurality of cylindrical battery cells may be spaced apart from each other to allow the coolant to flow, and thus the present disclosure may allow the coolant to flow in the gap well. Accordingly, there is no stagnant coolant, thereby increasing the cooling efficiency of the battery module.

According to an aspect of the present disclosure, the present disclosure is configured such that the plurality of cooling passages of the upper case and the plurality of cooling passages of the lower case are spaced apart from each other in the vertical direction, to form a hollow (empty) space between the upper case and the lower case, thereby allowing the coolant to intensively flow in an area in which more cooling is required (for example, at the horizontal center of the plurality of cylindrical battery cells) inside the module housing through which the gap. Accordingly, it is possible to increase the life of the battery module, and significantly reduce a failure rate.

### BRIEF DESCRIPTION OF THE DRAWINGS

The accompanying drawings illustrate preferred embodiments of the present disclosure, and together with the foregoing disclosure, serve to provide further understanding of the technical spirit of the present disclosure. However, the present disclosure is not to be construed as being limited to the drawings.
FIG. 1 is a schematic perspective view of a battery module according to an embodiment of the present disclosure.
FIG. 2 is a schematic exploded perspective view of a battery module according to an embodiment of the present disclosure.
FIG. 3 is a schematic bottom view of a battery module according to an embodiment of the present disclosure.
FIG. 4 is a schematic plane view of a battery module according to another embodiment of the present disclosure.
FIG. 5 is a schematic cross-sectional view taken along the line A-A' of FIG. 1.
FIG. 6 is a schematic vertical cross-sectional view of a battery module according to another embodiment of the present disclosure.
FIG. 7 is a schematic partial perspective view of a battery pack according to an embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

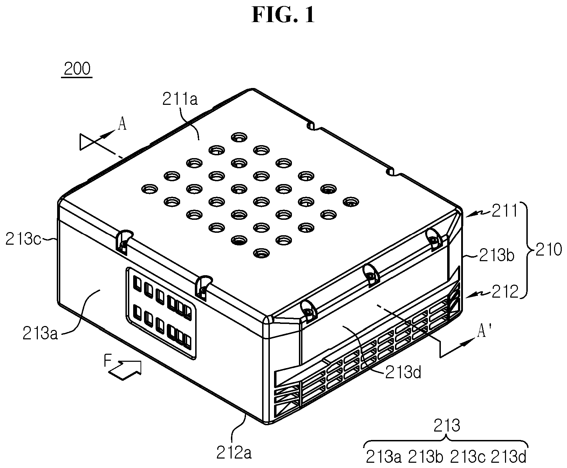

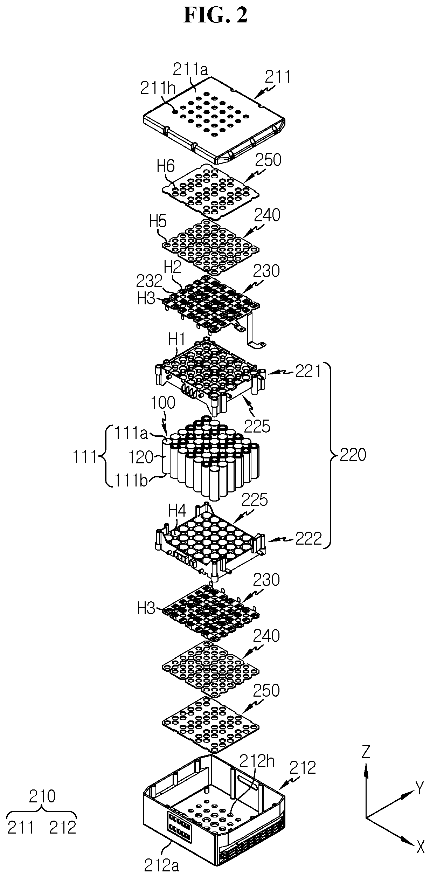

FIG. 1 is a schematic perspective view of a battery module according to an embodiment of the present disclosure. FIG. 2 is a schematic partial exploded perspective view of the battery module according to an embodiment of the present disclosure.

Referring to FIGS. 1 and 2, the battery module 200 according to an embodiment of the present disclosure may include a plurality of cylindrical battery cells 100, a module housing 210 and a cell frame 220.

Here, the cylindrical battery cell 100 may include a cylindrical battery can 120 and an electrode assembly (not shown) received in the battery can 120.

The cylindrical battery cell 100 may include the battery can 120 standing upright in the vertical direction. The battery can 120 may include a material having high electrical conductivity, and for example, the battery can 120 may include an aluminum alloy or a copper alloy.

2 electrode terminals 111 may be formed on top and bottom of the battery can 120. In detail, a positive electrode terminal 111a may be formed on a flat circular upper surface on top of the battery can 120, and a negative electrode terminal 111b may be formed on a flat circular lower surface on bottom of the battery can 120.

The battery can 120 may be coated with an electrical insulating element on the side.

That is, since the battery can 120 is electrically connected to the electrode of the electrode assembly inside, the battery can 120 may be covered with an insulating film (not shown) or an electrical insulating adhesive on the side to prevent electrical leakage caused by the contact between an unintentional conductive object and the battery can 120.

The electrode assembly (not shown) may be formed by winding, into a jelly-roll shape, the positive electrode including a positive electrode plate coated with a positive electrode active material and the negative electrode including a negative electrode plate coated with a negative electrode active material with a separator interposed between the positive electrode and the negative electrode. The positive electrode (not shown) may have a positive electrode tab attached thereto, and the positive electrode tab may be electrically connected to the positive electrode terminal 111a on top of the battery can 120. The negative electrode (not shown) may have a negative electrode tab attached thereto, and the negative electrode tab may be electrically connected to the negative electrode terminal 111b on bottom of the battery can 120.

The plurality of cylindrical battery cells 100 may stand upright in the vertical direction and may be arranged in the horizontal direction within the module housing 210 when viewed from the direction F of FIG. 1.

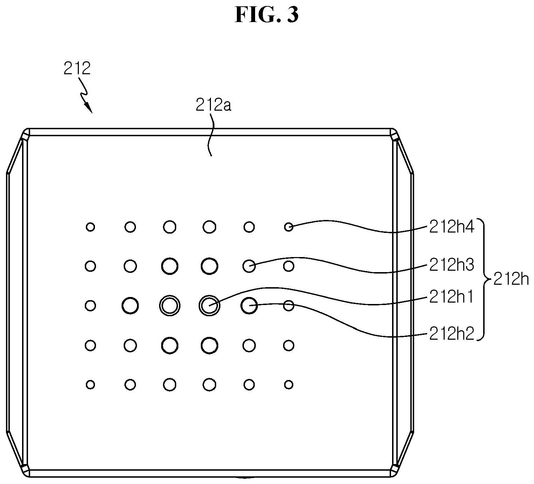

For example, as shown in FIG. 3, the first battery module 200 includes 56 cylindrical battery cells 100. The 56 cylindrical battery cells 100 may stand upright in the vertical direction, and may be arranged closely to each other in the horizontal direction.

Here, the terms indicating directions as used herein such as front and rear, left, right, upper, lower may change depending on the position of an observe or the stated element. However, for convenience of description, the front and rear, left, right, up and down directions are defined when viewed from the direction F.

The plurality of battery cells 110 may stand upright in the vertical direction when received in the module housing 210.

Referring back to FIGS. 1 and 2, the module housing 210 may include an upper wall 211a, a side wall 213 and a lower wall 212a to form an internal space in which the plurality of cylindrical battery cells 100 is received. For example, as shown in FIG. 1, the side wall 213 of the module housing 210 include a front sidewall 213a, a rear sidewall 213b, a left sidewall 213c and a right sidewall 213d. The upper wall 211a may be mounted on top of the side wall 213 and they may be coupled to each other. The lower wall 212a may be mounted on bottom of the side wall 213 and they may be coupled to each other.

The module housing 210 may include an upper housing 211 and a lower housing 212 coupled to the bottom of the upper housing 211. The upper housing 211 and the lower housing 212 may be bolt-coupled to each other. The module housing 210 may be configured to receive the cell frame 220 therein.

FIG. 3 is a schematic bottom view of the battery module according to an embodiment of the present disclosure.

Referring to FIG. 3 together with FIG. 2, at least one of the upper wall 211a or the lower wall 212a of the module housing 210 may have a plurality of cooling holes 211h through which a coolant K1 flows in and out. For example, as shown in FIG. 2, the upper wall 211a may have 30 cooling holes 211h that are open in the vertical direction. The lower wall 212a may have 30 cooling holes 212h that are open in the vertical direction.

Here, the coolant K1 may be continuously fed into the module housing 210 from the outside and the heated coolant K1 may be forced out of the module housing 210. A pump may be used to feed or force the coolant K1 out.

For example, the coolant K1 may be air, nitrogen, carbon dioxide, water, a Freon-based coolant, ammonia, acetone, methanol, ethanol, naphthalene, sulfur or mercury.

At least two of the cooling holes 211h of the module housing 210 may have different sizes. When viewed from the direction F of FIG. 1, the plurality of cooling holes 211h may be arranged in row and column, spaced a predetermined distance apart in the front-rear left-right directions. In this instance, 2 or more of the cooling holes 211h arranged in rows may have different sizes. 2 or more of the cooling holes 211h arranged in columns may have different sizes.

According to this configuration of the present disclosure, the battery module 200 of the present disclosure is configured such that at least two of the cooling holes 211h provided in the module housing 210 have different sizes, to increase the amount of the flow of coolant K1 at an area where cooling is required, thereby adjusting the temperature for each area within the battery module 200. Accordingly, it is possible to prevent overheat from occurring at a specific area of the battery module 200.

Referring back to FIGS. 1 and 2, the cell frame 220 may be received in the module housing 210.

The cell frame 220 may include an insertion portion 225 having an inner wall around at least part of the outer surface of each of the plurality of cylindrical battery cells 100. The insertion portion 225 may have a hollow H4 around the outer side of the cylindrical battery cell 100. For example, the insertion portion 225 may be configured to wrap around the outer surface of the upper and lower ends of the remaining cylindrical battery cells 100 except the electrode terminal.

The cell frame 220 may include a plurality of cooling passages 221h configured to be in communication with the plurality of cooling holes 211h. The cooling passage 221h may be connected to the cooling hole 211h and may have a hollow tubular shape extending vertically, through which the coolant K1 flows.

According to this configuration of the present disclosure, the cell frame 220 includes the plurality of cooling passages 221h configured to be in communication with the cooling holes 211h, to effectively transmit the heat of the coolant K1 flowing into the cooling hole 211h to the plurality of cylindrical battery cells 100 received in the insertion portions 225. Accordingly, with the module housing 210 and the cell frame 220, the present disclosure may protect the plurality of cylindrical battery cells 100 from external impacts, and supply the coolant K1 supplied from the outside to the plurality of cylindrical battery cells 100, thereby greatly increasing the cooling efficiency.

Referring back to FIG. 3, at least two of the cooling holes 212h provided in the lower wall 212a of the lower housing 212 of the module housing 210 are configured such that the cooling hole 212h closer to the center has a larger diameter than the cooling hole 212h disposed at the outer side. For example, as shown in FIG. 3, 30 cooling holes 212h arranged in 6 rows x 5 columns provided in the lower wall 212a of the module housing 210 may be arranged in the front-rear and left-right direction. Among them, the cooling holes 212h1 of 3^{rd} row 3^{rd} column and 4^{th} row 3^{rd} column disposed at the center may be largest, the cooling holes 212h2 of 2^{nd} row 3^{rd} column, 3^{rd} row 2^{nd} column, 3^{rd} row 4^{th} column, 4^{th} row 2^{nd} column, 4^{th} row 4^{th} column and 5^{th} row 3^{rd} column may be second largest, the cooling holes 212h3 of 2^{nd} row 2^{nd} column, 2^{nd} row 4^{th} column, 3^{rd} row 1^{st} column, 3^{rd} row 5^{th} column, 4^{th} row 1^{st} column, 4^{th} row 5^{th} column, 5^{th} row 2^{nd} column and 5^{th} row 4^{th} column may be third largest, the cooling holes of 1^{st} row 2^{nd} column, 1^{st} row 3^{rd} column, 1^{st} row 4^{th} column, 2^{nd} row 1^{st} column, 2^{nd} row 5^{th} column, 5^{th} row 1^{st} column, 5^{th} row 5^{th} column, 6^{th} row 2^{nd} column, 6^{th} row 3^{rd} column, 6^{th} row 4^{th} column may be fourth largest, and the cooling holes 212h4 of 1^{st} row 1^{st} column, 1^{st} row 5^{th} column, 6^{th} row 1^{st} column and 6^{th} row 5^{th} column may be fifth largest.

According to this configuration of the present disclosure, at least two of the cooling holes 212h provided in the lower wall 212a of the module housing 210 are configured such that the cooling hole 212h closer to the center has a larger diameter than the cooling hole 212h disposed at the outer side, so that the amount of the coolant K1 flowing into the lower wall 212a of the module housing 210 or the amount of the coolant K1 flowing out of the module housing 210 becomes larger as it is closer to the center of the module housing 210 in the horizontal direction.

That is, the battery module 200 of the present disclosure may have a higher cooling efficiency at the center in the horizontal direction. Accordingly, it is possible to effectively prevent the degradation of the cylindrical battery cell 100 caused by heat concentrated at the center of the plurality of cylindrical battery cells 100.

Here, the horizontal direction refers to a direction parallel to the ground when the module housing 210 is placed on the ground, and may be at least one direction on the plane perpendicular to the vertical direction.

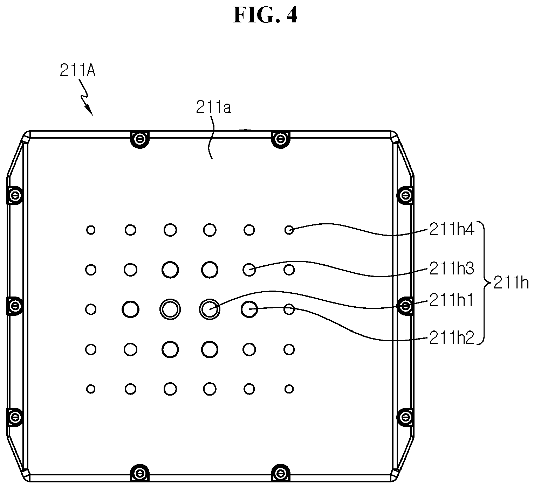

FIG. 4 is a schematic plane view of a battery module according to another embodiment of the present disclosure.

Referring to FIG. 4 together with FIG. 2, an upper wall 211a of an upper housing 211A of a module housing according to another embodiment of the present disclosure may have cooling holes 211h, and at least two of the cooling holes 211h may be configured such that the cooling hole 211h close to the center has a larger diameter than the cooling hole 211h disposed at the outer side.

For example, as shown in FIG. 4, 30 cooling holes 211h arranged in 6 rows x 5 columns provided in the upper wall 211a of the module housing 210 may be arranged in the front-rear and left-right directions. Among them, the cooling holes 211h1 of 3^{rd} row 3^{rd} column and 4^{th} row 3^{rd} column disposed at the center may be largest, the cooling holes 211h2 of 2^{nd} row 3^{rd} column, 3^{rd} row 2^{nd} column, 3^{rd} row 4^{th} column, 4^{th} row 2^{nd} column, 4^{th} row 4^{th} column and 5^{th} row 3^{rd} column may be second largest, the cooling holes 211h3 of 2^{nd} row 2^{nd} column, 2^{nd} row 4^{th} column, 3^{rd} row 1^{st} column, 3^{rd} row 5^{th} column, 4^{th} row 1^{st} column, 4^{th} row 5^{th} column, 5^{th} row 2^{nd} column and 5^{th} row 4^{th} column may be third largest, the cooling holes 211h of 1^{st} row 2^{nd} column, 1^{st} row 3^{rd} column, 1^{st} row 4^{th} column, 2^{nd} row 1^{st} column, 2^{nd} row 5^{th} column, 5^{th} row 1^{st} column, 5^{th} row 5^{th} column, 6^{th} row 2^{nd} column, 6^{th} row 3^{rd} column and 6^{th} row 4^{th} column may be fourth largest, and the cooling holes 211h4 of 1^{st} row 1^{st} column, 1^{st} row 5^{th} column, 6^{th} row 1^{st} column and 6^{th} row 5^{th} column may be fifth largest.

According to this configuration of the present disclosure, among at least two of the cooling holes 211h provided in the upper wall 211a of the upper housing 211A, the cooling hole 211h closer to the center may have a larger diameter than the cooling hole 211h disposed at the outer side, so that the amount of the coolant K1 flowing into the upper wall 211a of the module housing 210 or the amount of the coolant K1 flowing out of the module housing 210 is larger as it is closer to the center of the module housing 210 in the horizontal direction.

That is, the battery module 200 may have a higher cooling efficiency at the center in the horizontal direction. Accordingly, it is possible to effectively prevent the degradation of the cylindrical battery cell 100 caused by heat concentrated at the center of the plurality of cylindrical battery cells 100.

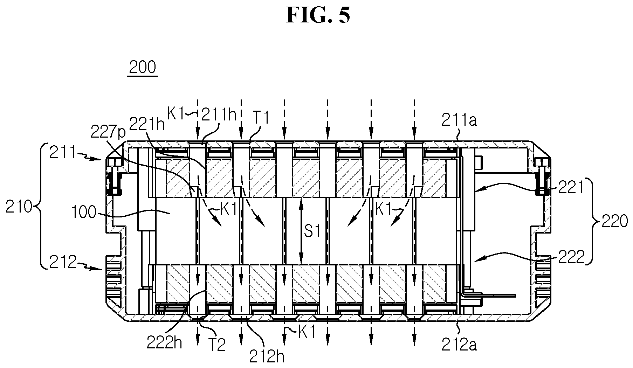

FIG. 5 is a schematic cross-sectional view taken along the line A-A' of FIG. 1.

Referring to FIG. 5 together with FIG. 2, the cooling passage 221h may have the size corresponding to the diameter of the cooling hole 211h in communication with the cooling passage 221h. As shown in FIG. 5, the cooling passage 221h disposed at the outermost side on the basis of the horizontal center may have the size corresponding to the diameter of the cooling hole 211h in communication with the cooling passage 221h.

In the cell frame 220 according to another embodiment of the present disclosure, since the size of the cooling passage 221h is set according to the diameter of the cooling hole 211h in communication with the cooling passage 221h, when at least two of the cooling holes 211h have different sizes, at least two of the cooling passages 221h may have different sizes.

For example, the cell frame 220 may include 30 cooling passages 221h arranged in 6 rows x 5 columns. Among them, the cooling passages 221h of 3^{rd} row 3^{rd} column and 4^{th} row 3^{rd} column disposed at the center may be largest, the cooling passages 221h of 2^{nd} row 3^{rd} column, 3^{rd} row 2^{nd} column, 3^{rd} row 4^{th} column, 4^{th} row 2^{nd} column, 4^{th} row 4^{th} column, 5^{th} row 3^{rd} column may be second largest, the cooling passages 221h of 2^{nd} row 2^{nd} column, 2^{nd} row 4^{th} column, 3^{rd} row 1^{st} column, 3^{rd} row 5^{th} column, 4^{th} row 1^{st} column, 4^{th} row 5^{th} column, 5^{th} row 2^{nd} column and 5^{th} row 4^{th} column may be third largest, the cooling passages 221h of 1^{st} row 2^{nd} column, 1^{st} row 3^{rd} column, 1^{st} row 4^{th} column, 2^{nd} row 1^{st} column, 2^{nd} row 5^{th} column, 5^{th} row 1^{st} column, 5^{th} row 5^{th} column, 6^{th} row 2^{nd} column, 6^{th} row 3^{rd} column and 6^{th} row 4^{th} column may be fourth largest, and the cooling passages 221h of 1^{st} row 1^{st} column, 1^{st} row 5^{th} column, 6^{th} row 1^{st} column and 6^{th} row 5^{th} column may be fifth largest.

According to this configuration of the present disclosure, the present disclosure is configured such that the cooling passage 221h has the size corresponding to the diameter of the cooling hole 211h in communication with the cooling passage 221h, to allow the coolant K1 flowing in through the cooling hole 211h of the module housing 210 to move along the cooling passage 221h without interruption, thereby increasing the cooling efficiency.

According to the present disclosure, at least two of the cooling passages 221h may have different sizes, to differently set the amount of the coolant K1 flowing in each of the cooling passages 221h. Accordingly, it is possible to intensively deliver the coolant K1 to an area in which more cooling is required within the battery module 200, thereby increasing the life of the battery module 200 and significantly reducing the probability that a failure will occur.

The plurality of cylindrical battery cells 100 is spaced apart from each other to allow the coolant K1 to flow. The cooling passage 221h may be disposed in the gap of the plurality of cylindrical battery cells 100. For example, as shown in FIG. 5, the plurality of cylindrical battery cells 100 may be spaced a predetermined distance apart from each other. The coolant K1 flowing in through the cooling hole may flow along the gap S1. The gap S1 may be in communication with the cooling passages 221h, 222h.

According to this configuration of the present disclosure, the plurality of cylindrical battery cells 100 is spaced apart from each other to allow the coolant K1 to flow, resulting in a smooth flow of the coolant K1 in the gap S1. Accordingly, the coolant K1 may flow smoothly without delay, thereby increasing the cooling efficiency of the battery module 200.

Referring back to FIGS. 2 and 5, the cell frame 220 includes a lower case 222 and an upper case 221. In detail, the lower case 222 is coupled to the bottom of the upper case 221. In other words, at least part of the upper surface of the lower case 222 may be connected to the lower surface of the upper case 221. In this instance, the upper case 221 and the lower case 222 may be bolt-coupled to each other. For example, part of the upper surface of the lower case 222 corresponding to the outer periphery may contact part of the lower surface of the upper case 221 corresponding to the outer periphery.

The plurality of cooling passages 221h of the upper case 221 and the plurality of cooling passages 222h of the lower case 222 are disposed at the corresponding positions in the vertical direction. That is, the coolant K1 flowing in through the cooling hole 211h of the module housing 210 may flow down along the cooling passage 221h of the upper case 221, then flow down through the cooling passage 222h of the lower case 222, and go to the outside. The cooling passages 221h may be disposed between the plurality of insertion portions 225 into which the cylindrical battery cells 100 are inserted.

The plurality of cooling passages 221h of the upper case 221 and the plurality of cooling passages 222h of the lower case 222 are spaced apart from each other in the vertical direction. That is, parts of the upper case 221 and the lower case 222 may be hollow (empty). For example, the remaining lower surface except the outer periphery of the upper case 221 in contact with the lower case 222 may be recessed in the upward direction. The remaining upper surface except the outer periphery of the lower case 222 in contact with the upper case 221 may be recessed in the downward direction.

As shown in FIG. 5, the 30 cooling passages 221h of the upper case 221 and the 30 cooling passages 222h of the lower case 222 may be spaced a predetermined distance apart from each other in the vertical direction. Each of the upper case 221 and the lower case 222 may have a step structure. The hollow (empty) space formed by the upper case 221 and the lower case 222 may be configured to allow the coolant K1 flowing in through the cooling passage 221h of the cell frame 220 to freely move along many directions in a distributed manner within the hollow (empty) space.

According to this configuration of the present disclosure, the present disclosure has the hollow (empty) space between the upper case 221 and the lower case 222 since the plurality of cooling passages 221h of the upper case 221 and the plurality of cooling passages 222h of the lower case 222 are spaced apart from each other in the vertical direction. Through the gap, the coolant K1 may intensively flow in an area in which more cooling is required (for example, the horizontal center of the plurality of cylindrical battery cells) within the module housing 210. Accordingly, it is possible to increase the life of the battery module 200, and significantly reduce a failure rate.

The plurality of cooling holes 211h provided in the upper wall 211a of the module housing 210 may be configured to introduce the coolant K1 into the module housing 210 from the outside by an external device capable of feeding the coolant K1.

The plurality of cooling holes 212h provided in the lower wall 212a of the module housing 210 may be configured to force the coolant K1 out of the module housing 210 by an external device capable of sucking the coolant K1. In this case, compared to the external device capable of feeding the coolant K1, it is possible to reduce the influence of heat from a pump or a motor provided in the external device on the temperature rise of the coolant K1 more fundamentally.

According to this configuration of the present disclosure, when the plurality of cooling holes 212h provided in the lower wall 212a of the module housing 210 is configured to force the coolant K1 fed into the module housing 210 out by the external device capable of sucking the coolant K1, it is possible to prevent the coolant K1 from increasing the temperature by the external device. Accordingly, it is possible to cool the battery module 200 more effectively.

Referring back to FIG. 5, when the cell frame 220 according to an embodiment of the present disclosure is configured to allow the coolant K1 fed from the outside to move along the cooling passage 221h provided in the upper case 221, at least some of the cooling passages 221h of the upper case 221 may include a guide portion configured to change the flow direction of the coolant K1 to the horizontal inward direction of the plurality of cylindrical battery cells 100.

For example, the guide portion may include a guide protrusion 227p extending in the horizontal inward direction of the plurality of cylindrical battery cells 100. For example, as shown in FIG. 5, among the plurality of cooling passages 221h provided in the upper case 221, the cooling passage 221h disposed at the outer side on the basis of the horizontal center may have the guide protrusion 227p.

The guide protrusion 227p may be configured to always move the coolant K1 fed into the cooling passage 221h of the upper case 221 to the center of the plurality of cylindrical battery cells 100 through the gap S1 when the coolant K1 flows out of the cooling passage 221h. Accordingly, the guide protrusions 227p provided in the plurality of cooling passages 221h may extend toward the center of the plurality of cylindrical battery cells 100.

The plurality of guide protrusions 227p may extend to different extents or at different angles. For example, among the plurality of cooling passages 221h, the guide protrusion 227p disposed at the outer side on the basis of the horizontal center may extend to a greater extent or at a higher angle. On the contrary, the guide protrusion 227p provided in the cooling passage 221h closer to the horizontal center may extend to a smaller extent or at a lower angle than the guide protrusion 227p disposed at the outer side. Among the plurality of cooling passages 221h provided in the upper case 221, the cooling passage 221h disposed at the horizontal center may not have the guide protrusion 227p.

According to this configuration of the present disclosure, the guide portion includes the guide protrusions 227p extending in the horizontal inward direction of the plurality of cylindrical battery cells 100, to induce the coolant K1 to intensively flow at the center of the plurality of cylindrical battery cells 100. Accordingly, it is possible to prevent some battery cells from degrading due to heat imbalance of the plurality of cylindrical battery cells 100, thereby significantly increasing the life of the battery module 200.

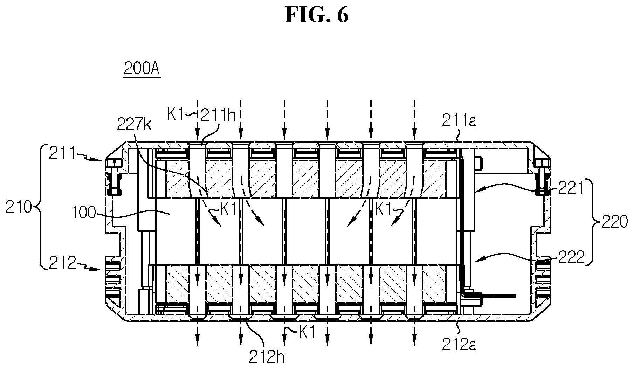

FIG. 6 is a schematic vertical cross-sectional view of the battery module according to another embodiment of the present disclosure.

Referring to FIG. 6, the guide portion of the battery module 200A according to another embodiment of the present disclosure may have a bent structure 227k in which the cooling passages 221h of the upper case 221 are bent in the horizontal inward direction of the plurality of cylindrical battery cells 100. That is, the present disclosure may have the bent structure 227k formed by bending parts of the cooling passages 221h, to guide the coolant K1 discharged to the gap S1 through the cooling passages 221h to move toward the horizontal center of the plurality of cylindrical battery cells 100.

Among the plurality of cooling passages 221h of the upper case 221, the guide portion disposed at the outer side on the basis of the horizontal center may have a higher bend angle of the cooling passage 221h. On the contrary, the bend angle of the cooling passage 221h closer to the horizontal center may be smaller than the guide portion disposed at the outer side. Among the plurality of cooling passages 221h provided in the upper case 221, the cooling passage 221h disposed at the horizontal center may not have the bent guide portion.

According to this configuration of the present disclosure, the cooling passage 221h of the upper case 221 includes the guide portion bent in the horizontal inward direction of the plurality of cylindrical battery cells 100, to induce the coolant K1 to intensively flow at the center of the plurality of cylindrical battery cells 100. Accordingly, it is possible to prevent some battery cells from degrading due to heat imbalance of the plurality of cylindrical battery cells 100, thereby significantly increasing the life of the battery module 200.

Referring back to FIG. 5, the plurality of cooling holes 211h provided in the upper wall 211a of the module housing 210 may include a tapered structure T1 having the inner diameter gradually decreasing in the vertical inward direction toward the plurality of cylindrical battery cells 100. For example, each of 30 cooling holes 211h provided in the upper wall 211a of the module housing 210 may include the tapered structure T1 having the inner diameter gradually decreasing in the downward direction toward the plurality of cylindrical battery cells 100.

That is, when the coolant K1 is fed into the upper wall 211a of the module housing 210 by the external device, the plurality of cooling holes 211h may have the tapered structure T1 to allow the coolant K1 to flow into the module housing 210 in a large amount at a higher flow rate.

According to this configuration of the present disclosure, the plurality of cooling holes 211h provided in the upper wall 211a of the module housing 210 includes the tapered structure T1 having the inner diameter gradually decreasing in the vertical inward direction toward the plurality of cylindrical battery cells 100, to increase the rate and amount of the coolant K1 flowing into the module housing 210, thereby increasing the cooling efficiency of the battery module 200.

Referring back to FIG. 5, the plurality of cooling holes 212h provided in the lower wall 212a of the module housing 210 may include a tapered structure T2 having the inner diameter gradually decreasing in the vertical outward direction (to the outside). For example, each of 30 cooling holes 211h provided in the lower wall 212a of the module housing 210 may include the tapered structure T2 having the inner diameter gradually decreasing in the downward direction to force the coolant K1 out.

That is, the plurality of cooling holes 212h provided in the lower wall 212a of the module housing 210 may have the tapered structure T2 to allow the coolant K1 heated in the module housing 210 to flow out of the module housing 210 in a large amount at a higher flow rate.

According to this configuration of the present disclosure, the plurality of cooling holes 212h provided in the lower wall 212a of the module housing 210 includes the tapered structure T2 having the inner diameter gradually decreasing in the vertical outward direction, to increase the rate and amount of the coolant K1 flowing out of the module housing 210, thereby further increasing the cooling efficiency of the battery module 200.

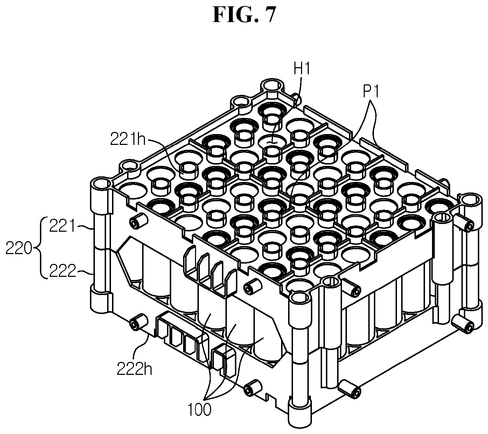

FIG. 7 is a schematic perspective view of some components of the battery pack according to an embodiment of the present disclosure.

Referring to FIG. 7 together with FIG. 2, the cooling passage 221h provided in the cell frame 220 may have an outer end extending vertically from the outer side of the cell frame 220. For example, the cooling passage 221h provided in the upper case 221 may extend further upwards than the outer side around the cooling passage 221h. The cooling passage 222h provided in the lower case 222 may extend further downwards than the outer side around the cooling passage 222h.

The cell frame 220 may have an exposure hole H1 through which the electrode terminal (111 in FIG. 2) is exposed to the outside. For example, as shown in FIG. 7, 42 cylindrical battery cells 100 may be inserted and received in 42 insertion portions 225 of the cell frame 220. The electrode terminals of the 42 cylindrical battery cells 100 may be exposed to the outside through the exposure holes H1 of the cell frame 220. Each of the upper case 221 and the lower case 222 may have 42 exposure holes H1.

The battery module 200 according to an embodiment of the present disclosure may further include a plurality of connecting plates 230 mounted on each of the top and bottom of the cell frame 220. In detail, each of the plurality of connecting plates 230 may include a connection hole H2 in communication with the exposure hole H1, a connection terminal 232 extending from the inner side of the connection hole H2 to electrically connect the plurality of cylindrical battery cells 100, and an insertion groove H3 into which the end of the cooling passage 221h is inserted.

Here, the connecting plate 230 may include an electrically conductive material. For example, the electrically conductive material may be a metal alloy including copper, nickel, aluminum, gold and silver as the main material.

For example, the upper case 221 may include 30 cooling passages 221h extending further upwards than the remaining upper surface. The connecting plate 230 mounted on the upper surface of the upper case 221 may have 30 insertion grooves H3 into which the ends of 30 cooling passages 221h are inserted.

The lower case 222 may include 30 cooling passages (not shown) extending further downwards than the remaining lower surface. The connecting plate 230 mounted on the lower surface of the lower case 222 may have 30 insertion grooves H3 into which the ends of the 30 cooling passages (not shown) are inserted.

According to this configuration of the present disclosure, as the battery module 200 of the present disclosure further includes at least one connecting plate 230 having the insertion groove H3 into which the end of the cooling passage 221h is inserted, the connecting plate 230 electrically connected to the electrode terminal may generate a very large amount of heat due to electrical resistance, and thus when the end of the cooling passage 221h is inserted into the insertion groove H3 of the connecting plate 230, the heat of the connecting plate 230 may be effectively cooled down through the cooling passage 221h through which the coolant K1 flows.

It is easy to mount and fix at least one connecting plate 230 of the present disclosure on the cell frame 220, thereby increasing the fabrication efficiency. The present disclosure may effectively prevent the connecting plate 230 from moving through the insertion groove H3 through which the cooling passage 221h is inserted during the welding operation between the connection terminal 232 and the electrode terminal (111 in FIG. 2), thereby greatly increasing the efficiency of the welding operation.

Referring back to FIG. 7 together with FIG. 2, a partition wall P1 may be provided on each of the upper surface and the lower surface of the cell frame 220. In detail, the partition wall P1 may extend in the outward direction and extend linearly in the horizontal direction. Part of the partition wall P1 may be configured to connect the plurality of cooling passages 221h.

For example, as shown in FIG. 7, the partition wall P1 linearly extending in the front-rear and left-right directions may be provided on the upper surface of the cell frame 220. The partition wall P1 may extend along the outer periphery of the upper surface of the cell frame 220. The partition wall P1 may be disposed between the plurality of cooling passages 221h.

The connecting plate 230 may be mounted in the space defined by the partition wall P1 on the upper and lower surfaces of the cell frame 220. For example, as shown in FIG. 7, the upper surface of the upper case 221 may be divided into 7 areas by the partition wall P1. 7 connecting plates 230 may be respectively mounted on the 7 areas.

According to this configuration of the present disclosure, the partition wall P1 extending in the outward direction and extending linearly in the horizontal direction and having part connecting the plurality of cooling passages 221h is provided on each of the upper and lower surfaces of the cell frame 220, and thus when at least two connecting plates 230 are mounted on the upper and lower surfaces of the cell frame 220, it is possible to electrically insulate the at least two connecting plates 230 to prevent a short circuit between the at least two connecting plates 230. Accordingly, it is possible to effectively increase the safety and durability of the battery module 200 of the present disclosure.

The partition wall P1 may be provided on the outer periphery of each of the upper surface and the lower surface of the cell frame 220. Part of the partition wall P1 formed on the periphery may have an opening that runs in the horizontal direction. Part of the connecting plate 230 may extend to the outside through the opening. The partition wall P1 provided on the periphery may prevent the separation of the connecting plate 230 or the contact with an external conductive material.

Referring back to FIGS. 2 and 7, the battery module 200 according to an embodiment of the present disclosure may further include a thermally conductive pad 240 and a heat sink 250.

In detail, the thermally conductive pad 240 may include a material having high thermal conductivity. The thermally conductive pad 240 may include an electrical insulating material. For example, the thermally conductive pad 240 may have a solidified form of polymer resin having high thermal conductivity or a silicon-based resin. In more detail, the polymer resin may be polysiloxane resin, polyamide resin, urethane resin or epoxy-based resin. Alternatively, the thermally conductive pad 240 may be a solidified form of an added adhesive material. For example, the adhesive material may be an acrylic, polyester-based, polyurethane-based or rubber-based material.

The thermally conductive pad 240 may have a fixing groove H5 mounted on the outer side of the connecting plate 230, into which the cooling passage 221h is inserted. For example, the thermally conductive pad 240 mounted on top of the upper case 221 may have 30 fixing grooves H5 into which the ends of the 30 cooling passages 221h are inserted.

According to this configuration of the present disclosure, the thermally conductive pad 240 of the present disclosure includes the fixing grooves H5 into which the cooling passages 221h are inserted, so it is easy to mount and fix the thermally conductive pad 240 onto the cell frame 220, thereby increasing the fabrication efficiency. The thermally conductive pad 240 may effectively absorb heat of the connecting plate 230 that generates a very large amount of heat due to electrical resistance, thereby effectively increasing the cooling efficiency of the battery module 200.

The heat sink 250 may have a fixing hole H6 mounted on the outer side of the thermally conductive pad 240, into which the cooling passage 221h is inserted. Here, the heat sink 250 may be configured to be disposed between the module housing 210 and the thermally conductive pad 240. The heat sink 250 may be a cooling plate including a material having high thermal conductivity. The material having high thermal conductivity may be copper or aluminum.

A battery pack (not shown) according to the present disclosure may include at least one battery module 200. In addition to the battery module 200, the battery pack according to the present disclosure may further include a pack case to receive the battery module 200, various types of devices to control the charge/discharge of the battery module 200, for example, a Battery Management System (BMS), a current sensor and a fuse.

An electronic device according to the present disclosure may include the battery pack. The electronic device (not shown) may include a case (not shown) to receive the battery pack therein.

A vehicle (not shown) according to the present disclosure may include the battery pack. The vehicle may be, for example, an electric vehicle including an electric motor (not shown) using the battery pack as a power source.

The terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the scope of the appended claims.

**[Description of Reference Numerals]**

| | | | |
|---|---|---|---|
| 200: | Battery module | 100: | Cylindrical battery cell |
| 210: | Module housing | | |
| 211, 212: | Upper housing, Lower housing | | |
| 220: | Cell frame | | |
| 211h, 212h: | Cooling hole | 221h, 222h: | Cooling passage |
| 221: | Insertion portion | | |
| 221, 222: | Upper case, Lower case | | |
| K1: | Coolant | | |
| 227p: | Guide protrusion | 227k: | Bent structure |
| T1, T2: | Tapered structure | 230: | Connecting plate |
| H1, H2, H3: | Exposure hole, Connection hole, Insertion groove | | |
| 232: | Connection terminal | P1: | Partition wall |
| 240: | Thermally conductive pad | 250: | Heat sink |

### INDUSTRIAL APPLICABILITY

The present disclosure relates to a battery module and a battery pack. In addition, the present disclosure can be used in the industry of battery modules, and electronic devices comprising battery packs.

## Claims

1. A battery module (200) comprising:
a plurality of cylindrical battery cells (100) including an electrode terminal formed in each of an upper end and a lower end, and arranged in a horizontal direction;
a module housing (210) including an upper wall, a sidewall and a lower wall to receive the plurality of cylindrical battery cells (100), at least one of the upper wall or the lower wall having a plurality of cooling holes (221h, 212h) through the coolant (K1) flows in and out, at least two of the cooling holes (221h, 212h) having different sizes; and
a cell frame (220) received in the module housing (210) and including a plurality of insertion portions (225) having an inner wall to wrap around at least part of an outer surface of each of the plurality of cylindrical battery cells (100), and a plurality of cooling passages (221h, 222h) connected to the cooling holes (221h, 212h) in communication with the cooling holes (221h, 212h) and having a tubular shape extending in a vertical direction to allow the coolant (K1) to flow in and out, wherein the plurality of cylindrical battery cells (100) is spaced apart from each other to allow the coolant (K1) to flow,
**characterized in that**
the cell frame (220) includes an upper case (221) including the plurality of insertion portions (225) and the plurality of cooling passages (221h, 222h), and a lower case (222) coupled to bottom of the upper case (221) and including the plurality of insertion portions (225) and the plurality of cooling passages (221h, 222h),
the plurality of cooling passages (221h, 222h) of the upper case (221) and the plurality of cooling passages (221h, 222h) of the lower case (222) are disposed corresponding to each other in the vertical direction, and
the plurality of cooling passages (221h, 222h) of the upper case (221) and the plurality of cooling passages (221h, 222h) of the lower case (222) are spaced apart from each other in the vertical direction.

2. The battery module (200) according to claim 1, wherein at least two of the plurality of cooling holes (221h, 212h) are configured such that a cooling hole closer to a center has a larger diameter than a cooling hole disposed at an outer side.

3. The battery module (200) according to claim 1, wherein the cooling passage (221h, 222h) has a size corresponding to a diameter of the cooling hole in communication with the cooling passage (221h, 222h).

4. The battery module (200) according to claim 1, wherein the plurality of cooling holes (221h, 212h) in the upper wall of the module housing (210) is configured to allow the coolant (K1) to flow from outside to inside, and
the plurality of cooling holes (221h, 212h) provided in the lower wall of the module housing (210) is configured to force the coolant (K1) fed into the module housing (210) out.

5. The battery module (200) according to claim 4, wherein at least some of the cooling passages (221h, 222h) of the upper case (221) include a guide portion configured to change a flow direction of the coolant (K1) to a horizontal inward direction of the plurality of cylindrical battery cells (100).

6. The battery module (200) according to claim 5, wherein the guide portion includes a guide protrusion (227p) extending in the horizontal inward direction of the plurality of cylindrical battery cells (100).

7. The battery module (200) according to claim 5, wherein the guide portion has a bent structure (227k) in which the cooling passages (221h, 222h) of the upper case (221) are bent in the horizontal inward direction of the plurality of cylindrical battery cells (100).

8. The battery module (200) according to claim 5, wherein the plurality of cooling holes (221h, 212h) provided in the upper wall of the module housing (210) includes a tapered structure (T1, T2) having an inner diameter gradually decreasing in the horizontal inward direction.

9. The battery module (200) according to claim 5, wherein the plurality of cooling holes (221h, 212h) provided in the lower wall of the module housing (210) includes a tapered structure (T1, T2) having an inner diameter gradually decreasing in a vertical outward direction.

10. The battery module (200) according to claim 1, wherein the cooling passage (221h, 222h) has an outer end extending in the vertical direction from an outer surface of the cell frame (220),
the cell frame (220) has an exposure hole (H1) to expose the electrode terminal to the outside, and
the battery module (200) further includes a connection hole (H2) mounted on each of the upper and lower parts of the cell frame (220), the connection hole (H2) in communication with the exposure hole (H1), a connection terminal (232) extending from an inner side of the connection hole (H2) to electrically connect the plurality of cylindrical battery cells (100), and at least one connecting plate (230) having an insertion groove (H3) in which the end of the cooling passage (221h, 222h) is inserted.

11. The battery module (200) according to claim 10, wherein each of an upper surface and a lower surface of the cell frame (220) has a partition wall (P1) extending in an outward direction and extending linearly in the horizontal direction, of which part connects the plurality of cooling passages (221h, 222h), and
the partition wall (P1) is disposed corresponding to an outer periphery of the connecting plate (230) in the horizontal direction.

12. The battery module (200) according to claim 10, further comprising:
a thermally conductive pad (240) mounted on an outer side of the connecting plate (230) and including a fixing groove into which the cooling passage (221h, 222h) is inserted; and
a heat sink (250) the mounted on an outer side of the thermally conductive pad (240) and including a fixing hole into which the cooling passage (221h, 222h) is inserted.

13. A battery pack comprising at least one battery module (200) according to any one of claims 1 to 12.

## Patentansprüche

1. Batteriemodul (200), umfassend:
eine Mehrzahl von zylindrischen Batteriezellen (100), welche einen Elektrodenanschluss umfassen, welcher in jedem eines oberen Endes und eines unteren Endes gebildet ist, und in einer horizontalen Richtung angeordnet sind,
ein Modulgehäuse (210), welches eine obere Wand, eine Seitenwand und eine untere Wand umfasst, um die Mehrzahl von zylindrischen Batteriezellen (100) aufzunehmen, wobei wenigstens eine aus der oberen Wand oder der unteren Wand eine Mehrzahl von Kühlungslöchern (221h, 212h) aufweist, durch welche das Kühlmittel (K1) ein- und ausströmt, wobei wenigstens zwei der Kühlungslöcher (221h, 212h) unterschiedliche Größen aufweisen; und
einen Zellenrahmen (220), welcher in dem Modulgehäuse (210) aufgenommen ist und eine Mehrzahl von Einführabschnitten (225), welche eine innere Wand aufweisen, um wenigstens einen Teil einer äußeren Fläche jeder der Mehrzahl von zylindrischen Batteriezellen (100) zu umhüllen, und eine Mehrzahl von Kühlkanälen (221h, 222h) umfasst, welche mit den Kühlungslöchern (221h, 212h) verbunden sind, in Kommunikation mit den Kühlungslöchern (221h, 212h) stehen und eine rohrförmige Form aufweisen, welche sich in einer vertikalen Richtung erstreckt, um dem Kühlmittel (K1) zu erlauben, ein- und auszuströmen, wobei die Mehrzahl von zylindrischen Batteriezellen (100) voneinander beabstandet sind, um dem Kühlmittel (K1) zu erlauben, zu strömen,
**dadurch gekennzeichnet, dass** der Zellenrahmen (220) eine obere Hülle (221), welche die Mehrzahl von Einführabschnitten (225) und die Mehrzahl von Kühlkanälen (221h, 222h) umfasst, und eine untere Hülle (222) umfasst, welche mit dem Boden der oberen Hülle (221) gekoppelt ist und die Mehrzahl von Einführabschnitten (225) und die Mehrzahl von Kühlkanälen (221h, 222h) umfasst,
wobei die Mehrzahl von Kühlkanälen (221h, 222h) der oberen Hülle (221) und die Mehrzahl von Kühlkanälen (221h, 222h) der unteren Hülle (222) einander entsprechend in der vertikalen Richtung angeordnet sind, und
wobei die Mehrzahl von Kühlkanälen (221h, 222h) der oberen Hülle (221) und die Mehrzahl von Kühlkanälen (221h, 222h) der unteren Hülle (222) voneinander in der vertikalen Richtung beabstandet sind.

2. Batteriemodul (200) nach Anspruch 1, wobei wenigstens zwei der Mehrzahl von Kühlungslöchern (221h, 212h) derart eingerichtet sind, dass ein Kühlungsloch, welches näher an einer Mitte ist, einen größeren Durchmesser aufweist als ein Kühlungsloch, welches an einer äußeren Seite angeordnet ist.

3. Batteriemodul (200) nach Anspruch 1, wobei der Kühlkanal (221h, 222h) eine Größe entsprechend einem Durchmesser des Kühlungslochs aufweist, welches in Kommunikation mit dem Kühlkanal (221h, 222h) steht.

4. Batteriemodul (200) nach Anspruch 1, wobei die Mehrzahl von Kühlungslöchern (221h, 212h) in der oberen Wand des Modulgehäuses (210) dazu eingerichtet sind, dem Kühlmittel (K1) zu erlauben, von außen nach innen zu strömen, und
wobei die Mehrzahl von Kühlungslöchern (221h, 212h), welche in der unteren Wand des Modulgehäuses (210) bereitgestellt sind, dazu eingerichtet sind, das Kühlmittel (K1), welches in das Modulgehäuse (210) geführt ist, heraus zu drängen.

5. Batteriemodul (200) nach Anspruch 4, wobei wenigstens manche der Kühlkanäle (221h, 222h) der oberen Hülle (221) einen Führungsabschnitt umfassen, welcher dazu eingerichtet ist, eine Strömungsrichtung des Kühlmittels (K1) zu einer horizontalen nach innen gerichteten Richtung der Mehrzahl von zylindrischen Batteriezellen (100) zu ändern.

6. Batteriemodul (200) nach Anspruch 5, wobei der Führungsabschnitt einen Führungsvorsprung (227p) umfasst, welcher sich in der horizontalen nach innen gerichteten Richtung der Mehrzahl von zylindrischen Batteriezellen (100) erstreckt.

7. Batteriemodul (200) nach Anspruch 5, wobei der Führungsabschnitt eine gebogene Struktur (227k) aufweist, in welcher die Kühlkanäle (221h, 222h) der oberen Hülle (221) in der horizontalen nach innen gerichteten Richtung der Mehrzahl von zylindrischen Batteriezellen (100) gebogen sind.

8. Batteriemodul (200) nach Anspruch 5, wobei die Mehrzahl von Kühlungslöchern (221h, 212h), welche in der oberen Wand des Modulgehäuses (210) bereitgestellt sind, eine konische Struktur (T1, T2) umfassen, welche einen inneren Durchmesser aufweist, welcher graduell in der horizontalen nach innen gerichteten Richtung abnimmt.

9. Batteriemodul (200) nach Anspruch 5, wobei die Mehrzahl von Kühlungslöchern (221h, 212h), welche in der unteren Wand des Modulgehäuses (210) bereitgestellt sind, eine konische Struktur (T1, T2) umfassen, welche einen inneren Durchmesser aufweist, welcher graduell in der horizontalen nach innen gerichteten Richtung abnimmt.

10. Batteriemodul (200) nach Anspruch 1, wobei der Kühlkanal (221h, 222h) ein äußeres Ende aufweist, welche sich in der vertikalen Richtung von einer äußeren Fläche des Zellenrahmens (220) erstreckt,
wobei der Zellenrahmen (220) ein Freilegeloch (H1) aufweist, um den Elektrodenanschluss nach außen freizulegen, und
wobei das Batteriemodul (200) ferner ein Verbindungsloch (H2), welches an jedem des oberen und unteren Teils des Zellenrahmens (220) angebracht ist, wobei das Verbindungsloch (H2) in Kommunikation mit dem Freilegeloch (H1) steht, einen Verbindungsanschluss (232), welcher sich von einer inneren Seite des Verbindungslochs (H2) erstreckt, um die Mehrzahl von zylindrischen Batteriezellen (100) elektrisch zu verbinden, und wenigstens eine Verbindungsplatte (230) umfasst, welche eine Einführnut (H3) aufweist, in welcher das Ende des Kühlkanals (221h, 222h) eingeführt ist.

11. Batteriemodul (200) nach Anspruch 10, wobei jede aus einer oberen Fläche und einer unteren Fläche des Zellenrahmens (220) eine Trennwand (P1) aufweist, welche sich in eine nach außen gerichteten Richtung erstreckt und sich linear in der horizontalen Richtung erstreckt, von welcher ein Teil die Mehrzahl von Kühlkanälen (221h, 222h) verbindet, und
wobei die Trennwand (P1) entsprechend einem äußeren Umfang der Verbindungsplatte (230) in der horizontalen Richtung angeordnet ist.

12. Batteriemodul (200) nach Anspruch 10, ferner umfassend:
ein thermisch leitendes Pad (240), welches an einer äußeren Seite der Verbindungsplatte (230) angebracht ist und eine Befestigungsnut umfasst, in welche der Kühlkanal (221h, 222h) eingeführt ist; und
eine Wärmesenke (250), welche an einer äußeren Seite des thermisch leitenden Pads (240) angebracht ist und ein Befestigungsloch umfasst, in welches der Kühlkanal (221h, 222h) eingeführt ist.

13. Batteriepack, umfassend wenigsten ein Batteriemodul (200) nach einem der Ansprüche 1 bis 12.

## Revendications

1. Module de batterie (200) comprenant :
une pluralité d'éléments de batterie cylindriques (100) comportant une borne d'électrode formée dans chacune d'une extrémité supérieure et d'une extrémité inférieure, et agencés dans une direction horizontale ;
un logement de module (210) comportant une paroi supérieure, une paroi latérale et une paroi inférieure pour recevoir la pluralité d'éléments de batterie cylindriques (100), au moins l'une parmi la paroi supérieure ou la paroi inférieure ayant une pluralité de trous de refroidissement (221h, 212h) à travers lesquels le liquide de refroidissement (K1) s'écoule en entrée et en sortie, au moins deux des trous de refroidissement (221h, 212h) ayant des tailles différentes ; et
un cadre d'élément (220) reçu dans le logement de module (210) et comportant une pluralité de parties d'insertion (225) ayant une paroi interne pour envelopper au moins une partie d'une surface externe de chacun de la pluralité d'éléments de batterie cylindriques (100), et une pluralité de passages de refroidissement (221h, 222h) reliés aux trous de refroidissement (221h, 212h) en communication avec les trous de refroidissement (221h, 212h) et ayant une forme tubulaire s'étendant dans une direction verticale pour permettre au liquide de refroidissement (K1) de s'écouler en entrée et en sortie, dans lequel la pluralité d'éléments de batterie cylindriques (100) sont espacés les uns des autres pour permettre au liquide de refroidissement (K1) de s'écouler,
**caractérisé en ce que**
le cadre d'élément (220) comporte un boîtier supérieur (221) comportant la pluralité de parties d'insertion (225) et la pluralité de passages de refroidissement (221h, 222h), et un boîtier inférieur (222) couplé au fond du boîtier supérieur (221) et comportant la pluralité de parties d'insertion (225) et la pluralité de passages de refroidissement (221h, 222h),
la pluralité de passages de refroidissement (221h, 222h) du boîtier supérieur (221) et la pluralité de passages de refroidissement (221h, 222h) du boîtier inférieur (222) sont disposés en correspondance les uns des autres dans la direction verticale, et
la pluralité de passages de refroidissement (221h, 222h) du boîtier supérieur (221) et la pluralité de passages de refroidissement (221h, 222h) du boîtier inférieur (222) sont espacés les uns des autres dans la direction verticale.

2. Module de batterie (200) selon la revendication 1, dans lequel au moins deux trous de la pluralité de trous de refroidissement (221h, 212h) sont configurés de sorte qu'un trou de refroidissement plus proche d'un centre possède un plus grand diamètre qu'un trou de refroidissement disposé au niveau d'un côté externe.

3. Module de batterie (200) selon la revendication 1, dans lequel le passage de refroidissement (221h, 222h) possède une taille correspondant à un diamètre du trou de refroidissement en communication avec le passage de refroidissement (221h, 222h).

4. Module de batterie (200) selon la revendication 1, dans lequel la pluralité de trous de refroidissement (221h, 212h) dans la paroi supérieure du logement de module (210) sont configurés pour permettre au liquide de refroidissement (K1) de s'écouler de l'extérieur vers l'intérieur, et
la pluralité de trous de refroidissement (221h, 212h) prévus dans la paroi inférieure du logement de module (210) sont configurés pour forcer le liquide de refroidissement (K1) acheminé dans le logement de module (210) à sortir.

5. Module de batterie (200) selon la revendication 4, dans lequel au moins certains des passages de refroidissement (221h, 222h) du boîtier supérieur (221) comportent une partie de guidage configurée pour changer une direction d'écoulement du liquide de refroidissement (K1) en une direction horizontale vers l'intérieur de la pluralité d'éléments de batterie cylindriques (100).

6. Module de batterie (200) selon la revendication 5, dans lequel la partie de guidage comporte une saillie de guidage (227p) s'étendant dans la direction horizontale vers l'intérieur de la pluralité d'éléments de batterie cylindriques (100).

7. Module de batterie (200) selon la revendication 5, dans lequel la partie de guidage possède une structure cintrée (227k) dans laquelle les passages de refroidissement (221h, 222h) du boîtier supérieur (221) sont cintrés dans la direction horizontale vers l'intérieur de la pluralité d'éléments de batterie cylindriques (100).

8. Module de batterie (200) selon la revendication 5, dans lequel la pluralité de trous de refroidissement (221h, 212h) prévus dans la paroi supérieure du logement de module (210) comporte une structure effilée (T1, T2) ayant un diamètre interne diminuant progressivement dans la direction horizontale vers l'intérieur.

9. Module de batterie (200) selon la revendication 5, dans lequel la pluralité de trous de refroidissement (221h, 212h) prévus dans la paroi inférieure du logement de module (210) comporte une structure effilée (T1, T2) ayant un diamètre interne diminuant progressivement dans une direction verticale vers l'extérieur.

10. Module de batterie (200) selon la revendication 1, dans lequel le passage de refroidissement (221h, 222h) possède une extrémité externe s'étendant dans la direction verticale à partir d'une surface externe du cadre d'élément (220),
le cadre d'élément (220) possède un trou d'exposition (H1) pour exposer la borne d'électrode à l'extérieur, et
le module de batterie (200) comporte en outre un trou de connexion (H2) monté sur chacune des parties supérieure et inférieure du cadre d'élément (220), le trou de connexion (H2) étant en communication avec le trou d'exposition (H1), une borne de connexion (232) s'étendant à partir d'un côté interne du trou de connexion (H2) pour connecter électriquement la pluralité d'éléments de batterie cylindriques (100), et au moins une plaque de connexion (230) ayant une rainure d'insertion (H3) dans laquelle l'extrémité du passage de refroidissement (221h, 222h) est insérée.

11. Module de batterie (200) selon la revendication 10, dans lequel chacune parmi une surface supérieure et une surface inférieure du cadre d'élément (220) possède une cloison (P1) s'étendant dans une direction vers l'extérieur et s'étendant linéairement dans la direction horizontale, dont une partie relie la pluralité de passages de refroidissement (221h, 222h), et
la cloison (P1) est disposée en correspondance d'une périphérie externe de la plaque de connexion (230) dans la direction horizontale.

12. Module de batterie (200) selon la revendication 10, comprenant en outre :
une garniture thermoconductrice (240) montée sur un côté externe de la plaque de connexion (230) et comportant une rainure de fixation dans laquelle le passage de refroidissement (221h, 222h) est inséré ; et
un dissipateur thermique (250) monté sur un côté externe de la garniture thermoconductrice (240) et comportant un trou de fixation dans lequel le passage de refroidissement (221h, 222h) est inséré.

13. Bloc-batterie comprenant au moins un module de batterie (200) selon l'une quelconque des revendications 1 à 12.
